# EUROPÄISCHE PATENTSCHRIFT

(11) **EP 1 104 497 B1**
(45) Veröffentlichungstag und Bekanntmachung des Hinweises auf die Patenterteilung: **03.03.2004**
(21) Anmeldenummer: 99950360.0
(22) Anmeldetag: 14.05.1999
(51) Int. Cl.: F02B 77/11, B60R 13/08

(54) **WÄRME- UND SCHALLDÄMMENDE VERKLEIDUNG FÜR DEN MOTORRAUM VON KRAFTFAHRZEUGEN**
HEAT AND SOUND INSULATING SHROUD FOR THE ENGINE COMPARTMENT OF MOTOR VEHICLES
HABILLAGE CALORIFUGE ET INSONORISANT POUR LE COMPARTIMENT MOTEUR DE VEHICULES AUTOMOBILES

(30) Priorität: 14.05.1998 DE 19821532
(43) Veröffentlichungstag der Anmeldung: 06.06.2001
(73) Patentinhaber: HP-CHEMIE PELZER RESEARCH & DEVELOPMENT Ltd., Waterford, County Waterford (IE)
(72) Erfinder: ENKLER, Michael, Fred, D-73061 Ebersbach (DE); BOPP, Michael, D-58455 Witten (DE)
(74) Vertreter: Jönsson, Hans-Peter, Dr.
(86) Internationale Anmeldenummer: PCT/EP1999/003351
(87) Internationale Veröffentlichungsnummer: WO 1999/058833

(56) Entgegenhaltungen:
- EP-A- 0 657 281
- EP-A- 0 683 280
- DE-A- 3 601 204
- DE-A- 3 818 301
- DE-A- 4 211 409
- DE-U- 9 003 347
- DE-U- 9 419 804

## Beschreibung

Gegenstand der Erfindung ist eine wärme- und schalldämmende Verkleidung für den Motorraum von Kraftfahrzeugen sowie ein Verfahren zu dessen Herstellung.

Im Motorraum moderner Fahrzeuge, sowohl bei PKW- als auch im NFZ-Bereich, werden in zunehmendem Maße Schallisolationsteile in Form von Absorbern zur Reduktion von Motorgeräuschen eingesetzt. Diese vorwiegend als Formteile konzipierten Absorber haben Einfluß auf das Außen- und Innengeräusch der Fahrzeuge. Im Bereich z. B. von Auspuffkrümmem oder Abgasrückführungen unterliegen diese Teile höherer Wärmebelastung. Die heute vorwiegend eingesetzten Formteile aus Faservliesstoffen (z.B. aus Baumwolle) oder auch aus PU-Schaum weisen typischerweise Wärmeformbeständigkeiten bis ca. 160°C auf. Bei höheren Wärmebelastungen werden diese Formteile auf der der Wärmequelle zugewandten Oberfläche partiell oder vollständig mit Aluminiumfolien als Hitzereflektor kaschiert, um die dahinterliegenden Faservliesstoffe zu schützen.

So ist es bekannt, in besonders wärmebelasteten Bereichen Einbauteile durch Aufkaschieren von Aluminiumfolien zu schützen. Solche Einbauteile sind aus DE-U-87 00 919 bekannt. Allerdings hat dies den Nachteil zur Folge, daß die schallabsorbierende Wirkung des unter der Aluminiumkaschierung befindlichen Einbauteils verloren geht, da der Schall die Aluminiumfolien nicht durchdringen kann.

Aus der DE 36 01 204 A ist ein aus mehreren Vlieslagen bestehender Absorptionsformkörper bekannt, der für geräuschdämmende Verkleidungen für den Motorraum von Kraftfahrzeugen dienen kann. Der Absorptionsformkörper besteht aus einer motorseitigen Decklage aus Kunststoff-Fasern, aus einer anschließenden wärmeisolierenden und schallabsorbierenden Lage aus anorganischem, thermisch hochbelastbarem Fasermaterial und aus einer weiteren absorbierenden Lage organischer Fasern.

In der DE 38 18 301 C ist ebenfalls ein geräuschdämmender Formkörper für den Motorraum von Kraftfahrzeugen beschrieben, bei dem anorganisches, thermisch hochbelastbares, durch ein Bindemittel gebundenes Fasermaterial motorseitig über ein melaminharzhaltiges Verbindungsmittel mit einem Kohlenstoff-Fasermaterial abgedeckt ist. Dieser Formkörper soll eine gute Geräuschdämmung besitzen und auch als thermische Isolierung bis in einen Temperaturbereich von etwa 500 °C anwendbar sein. Es ist dabei ferner vorgesehen, daß der Formkörper zur Karosserie hin mit einer Schicht aus Kohlenstoff-Fasern versehen ist. Diese Kohlenstoff-Faserschicht soll einen gewissen mechanischen Schutz für die empfindliche Lage aus anorganischen Fasermaterial ergeben.

Die DE 42 11 409 A1 betrifft eine selbsttragende, wärme- und schalldämmende Verkleidung für Verbrennungsmotoren von Kraftfahrzeugen, die aus mehreren Lagen besteht, die unter Einwirkung von Druck und Wärme unter Ausbildung von Zonen definiert vorgegebener Verdichtung verpreßt worden sind. Die Verkleidung besteht motorseitig aus einer stärkeren, wärmeisolierenden und schalldämmenden Lage aus einem anorganischen Fasermaterial, die mit einem Kohlenstoff-Fasermaterial abgedeckt ist. Eine stärkere, motorabgewandte Lage aus anorganischem Fasermaterial härtet zu einer selbsttragenden Trägerschicht aus. Diese Trägerschicht kann karosserieseitig mit einer Schicht aus einem Polyestervlies oder Polyacrylnitrilfasern abgedeckt sein.

Im Automobilbereich vielfach eingesetzt wird auch eine wärme- und schalldämmende Verkleidung auf der Basis von Melaminharzschäumen, auf die ein- oder beidseitig temperaturbeständige Deckschichten aufgebracht werden. Melaminharzschäume gelten nach DIN 4102 als schwerentflammbar und sind in ihrem Brandverhalten der Klasse B1 einzuordnen. Die Dauertemperaturbeständigkeit von -40 °C bis 150 °C und eine Dauertemperaturbelastbarkeit von 200°C für drei Wochen macht dieses Material besonders geeignet für die Herstellung von Verkleidungen für den Motorraum von Kraftfahrzeugen. Allerdings ist das Material außerordentlich teuer, so daß die Aufgabe der vorliegenden Erfindung darin besteht, in Bezug auf die Wärme- und Schalldämmung vergleichbare Verkleidungen für den Motorraum von Kraftfahrzeugen herzustellen, die jedoch gegenüber dem Stand der Technik eine deutliche Verringerung der Kosten beinhalten.

Die vorgenannte Aufgabe wird in einer ersten Ausführungsform gelöst durch wärme- und schalldämmende Verkleidungen für den Motorraum von Kraftfahrzeugen, bestehend aus einer motorseitigen Deckschicht 1, einer damit in Kontakt befindlichen, akustisch isolierenden, bis 180°C dauertemperaturbeständigen, bei 200°C drei Wochen dauertemperaturbelastbaren, duroplastischen Schaumstoffschicht 2 einer Dicke von weniger als 5 mm, einer damit in Kontakt befindlichen akustisch isolierenden Schicht 3 aus Kunststoffschaum, Partikelverbundschaum oder Faservlies bestehend aus nativen oder synthetischen Fasern sowie deren Gemische, genadelt oder ungenadelt und einer damit in Kontakt befindlichen, der Motorseite abgewandten Deckschicht 4.

Die erfindungsgemäßen Verkleidungsteile sind somit insbesondere geeignet, für die Verkleidung von Einbauteilen, Karosserieteilen oder dergleichen von Automobilen, hitzeabstrahlenden Maschinen und Aggregaten, insbesondere von schallabsorbierenden Elementen zum Schutz gegen zu hohe Wärmebelastungen durch Maschinenführungen, Katalysatorteile oder dergleichen, insbesondere im Motorraum von Kraftfahrzeugen.

Kerngedanke der vorliegenden Erfindung ist es, das relativ teure duroplastische Schaumstoffmaterial der Schaumstoffschicht 2 teilweise durch kostengünstigere Materialien zu ersetzen, ohne die wärme- und schalldämmenden Eigenschaften zu verschlechtern. Auch ist selbstverständlich nicht hinzunehmen, daß eine Verschlechterung des thermischen Verhaltens akzeptiert werden kann. So können die erfindungsgemäßen Verkleidungsteile den am und im Fahrzeug entstehenden Lärm mindern. Beispielsweise kann eine entsprechende schallisolierende Frontklappe die Schallausbreitung durch die Frontklappe vermindern. Die Geometrie des Verkleidungsteils ist dabei abhängig von der Frontklappeninnenseite und den räumlichen Verhältnissen im Motorraum. Die Befestigung der Verkleidungsteile geschieht beispielsweise durch Einstecken in ein Lochbild im Frontklappeninnenbereich. Sie werden durch möglichst wenig Spreiznieten gehalten. Im Bereich der Stirnwände im Motorraum ist es erfindungsgemäß möglich, Verkleidungsteile zwischen der Karosserie und dem Motoraggregat anzubringen, wobei vorzugsweise an der Karosserie mittels Grobgewindebolzen oder mit Druckknöpfen (bzw. Blechmuttem) die Verkleidungsteile befestigt werden.

Die Verkleidungsteile dienen hier der Schallabsorption des Motorfärms. Für dieses Bauteil sind die thermischen Verhältnisse, vor allem im Bereich eines motomahen Katalysators zu beachten.

Im Bereich des Radhauses im Motorraum befinden sich die erfindungsgemäßen Verkleidungsteile motorseitig im Luftsammelraum. Sie verhindern das Eindringen des Motorlärms in den Innenraum und werden vorzugsweise ebenfalls mit Grobgewindebolzen oder Druckknöpfen befestigt. Im Bereich der Stimwand des Motorraums dienen die erfindungsgemäßen Verkleidungsteile beispielsweise zur Abdeckung des Rohbaus von Querträger-Stirnwand oder dem Scheibenspalt bis auf Höhe des Tunnels zum Abschluß der Bodenverkleidung. Gegebenenfalls enthalten die Verkleidungsteile Durchbrüche für Leitungen der Klimaanlage. Im Bereich des Tunnels außen können die erfindungsgemäßen Verkleidungsteile ebenfalls zwischen dem Getriebe oder dem Abgasstrang und dem Bodenblech eingesetzt werden. Auch hier ist es erfindungsgemäß besonders bevorzugt, diese mit Grobgewindebolzen und/oder Druckknöpfen, beispielsweise Blechmuttern zu befestigen.

Beim Einsatz der erfindungsgemäßen Verkleidungsteile im Bereich der Reinluftwand oben, wird diese oben abgedeckt, und ist dann hier befestigt. Sie befindet sich dann oberhalb der linken oder rechten Stimwand des Motorraums.

Ein Abfall der Festigkeit durch den Einfluß von Wärme im bestimmungsgemäßen Gebrauch unterhalb des Ausgangswertes ist nicht gegeben.

Die maximal zulässige Temperatur der Verkleidungsteile auf der dem Blech abgewandten, motorseitigen Seite liegt in der gleichen Größenordnung, wie die von Verkleidungsteilen, die ausschließlich aus ein- oder beidseitig kaschierten Melaminharzschichten bestehen.

Als motorseitige Deckschicht 1 eignen sich insbesondere hochtemperaturbeständige Fasergebilde basierend auf anorganischen Fasern. Besonders bevorzugt im Sinne der vorliegenden Erfindung sind Vliese, Gewebe oder Gewirke der genannten Fasern. Neben PES-Vliesen sind erfindungsgemäß besonders bevorzugt Glasfaservliese und/oder Kohlenstoff-Faservliese, Keramikfaservliese oder Mineralfaservliese. Unter textilen Glasfasern im Sinne der vorliegenden Erfindung sind Fasern und Seiden aus glasigen Schmelzen von Natrium-, Kalium- und anderen Silikaten zu verstehen, die nach dem Düsensieb- (Seide), Stabsieb- (Seide und Faser) oder nach dem Düsenglasverfahren (Fasern) hergestellt werden. Charakteristisch ist die Unbrennbarkeit der Glasfasern, ihre hohe Wärmebeständigkeit, große Sprödigkeit und geringes Scheuerwiderstandsvermögen. Sie haben eine sehr hohe Zugfestigkeit, geringe Elastizität und sind verrottungsresistent.

Mineralsilikatfasern sind Mineralfasern, die aus Schmelzen von natürlichen Silikaten oder von Mischungen mit Silikaten, beispielsweise von Calcium-, Aluminium-, Magnesiumsilikaten erhalten werden. Die Mineralsilikatfasern sind sehr fein und glatt und haben einen runden Querschnitt und eine amorphe Struktur. Das Wärmeleitvermögen ist gering, sie sind unbrennbar und gegen alle normalen auftretenden chemischen Einwirkungen in gleicher Weise wie Glas beständig. Da die Faser nicht allein zu verspinnen sind, werden sie bereits im Stand der Technik in Mattenformen oder ähnlichen Formen, hauptsächlich für lsolierzwecke bei hohen Temperaturen eingesetzt.

Keramikfasern im Sinne der vorliegenden Erfindung sind anorganische Chemiefasern und Seiden aus Siliciumdioxid, Rayon, oder mit Anteilen von Oxiden, beispielsweise von Eisen-, Aluminium-, Magnesium- und/oder Calciumoxid.

Die Keramikfasern werden üblicherweise in Quarzfasern, Keramikfasern vom Typ A, G und V unterteilt.

Quarzfasern haben eine glatte Oberfläche, glasartige Strukturen und einen runden Querschnitt. Chemisch sind Quarzfasem beständig gegenüber allen üblichen Chemikalien. Man verwendet sie für Filtermaterial bei hohen Temperaturen und in aggressiven Medien, als Isoliermaterial in Raketen, Düsenflugzeugmotoren, Atomkraftwerken, Hochöfen und ähnlichem. Keramikfasern vom Typ A weisen Eigenschaften auf, die in etwa denen von Quarzfasern entsprechen. Auch die Eigenschaften von Keramikfasern vom Typ G entsprechen etwa denen von Quarzfasern, - sie sind beständig bis 1000°C und haben gute elektrische Isoliereigenschaften bei hohen Temperaturen und sind das einzige biegsame Material mit Elektroisoliereigenschaften in textiler Form.

Bei Keramikfasern vom Typ V lassen sich je nach dem Verbrennungsgrad der viskosen Trägermasse die Eigenschaften sehr stark variieren. Sie werden in Form von Fäden, Geweben, Gewirken, Vliesstoffen zum Isolieren bei hohen Temperaturen, für Hitzeschilde im Weltraum und an Hochöfen, in Düsenflugmotoren, Raketen und ähnlichem verwendet.

Kohlenstoff-Fasern im Sinne der vorliegenden Erfindung sind anorganische Fasern und Seiden, die durch Strukturumwandlung organischer Fasern mittels Pyrolyse erhalten werden. Je nach Anteil an Kohlenstoff und der bei der Pyrolyse angewendeten Temperatur teilt man die Kohlenstoff-Fasern ein in partiell carbonisierte Kohlenstoff-Fasern, carbonisierte Kohlenstoff-Fasern und Graphitfasern. Kohlenstoff-Fasern werden häufig in Form von Fasern und Fäden zur Kunststoffverstärkung, als Elektroisoliermaterial, zum Armierung von Metallen, Baustoffen, Werkstoffen für Weltraumflug, Raketen usw. eingesetzt.

Neben den obengenannten anorganischen Fasern sind prinzipiell auch metallische Fasern in den Textilen Gebilden einsetzbar. Der Nachteil metallischer Fasern besteht jedoch in dem hohen Wärmeleitvermögen, so daß diese in den textilen Gebilden nur in untergeordneten Mengen eingesetzt werden.

Besonders bevorzugt im Sinne der vorliegenden Erfindung umfassen die textilen Gebilde der Schicht 1 Kohlenstoff-Fasern.

Die Schichtdicke der jeweiligen Schichten kann den Erfordernissen angepaßt in einem großen Rahmen variiert werden. So ist im Sinne der vorliegenden Erfindung besonders bevorzugt, daß die Schichtdicke der textilen Gebilde 0,5 bis 1,5mm beträgt. Besonders bevorzugt ist es darüber hinaus, wenn das textile Gebilde ein Flächengewicht von 30 bis 200 g/m² aufweist. Das textile Gebilde dient insbesondere als mechanischer Schutz der duroplastischen Schaumstoffschicht 2, die bekanntermaßen eine geringe Festigkeit aufweist. Der oleophobe und hydrophobe Charakter der Fasern schützt die in der Verkleidung vorhandenen weiteren Schichten.

Besonders bevorzugt im Sinne der vorliegenden Erfindung besteht die Schaumstoffschicht 2 aus einem flexiblen, offenzelligen Schaumstoff aus Melaminharz. Ein entsprechendes Material ist beispielsweise unter der Bezeichnung Basotect® erhältlich. Hierunter ist ein flexibler, offenzelliger Schaumstoff aus Melaminharz, einem duroplastischen Kunststoff aus der Gruppe der Aminoplaste zu verstehen. Die filigrane, räumliche Netzstruktur des Schaumstoffs wird aus schlanken und damit leicht verformbaren Stegen gebildet.

Aus der räumlichen Struktur und dem Ausgangsprodukt resultiert ein attraktives Eigenschaftsprofil, das sich durch folgende Eigenschaften auszeichnet:
- Hohes Schallabsorptionsvermögen
- Dauertemperaturbeständigkeit: 200°C
- Brandverhalten: B1 nach DIN 4102
- Rohdichte: 10 kg/m³ ± 1,5 kg/m³
- Wärmeleitfähigkeit "lambda"₁₀ ≤ 0.035 W/mK
- Hohe Flexibilität
- Formgebung durch Pressen und Schneiden
- Einfache Bearbeitbarkeit

Das Material wird üblicherweise in Blockform an den Verarbeiter geliefert, der durch Schneiden und Pressen Formteile für vielfältige Anwendungen herstellen kann. Aus dem vielseitigen Eigenschaftsprofil resultiert ein breites Spektrum an Anwendungen. Die eigentlichen Produktvorteile ergeben sich aus der Kombination verschiedener Eigenschaften.

Die akustisch isolierende Schicht 3 besteht beispielsweise aus Kunststoffschaum oder Partikelverbundschaum. Kunststoffschaum im Sinne der vorliegenden Erfindung umfaßt vorzugsweise halbharten PUR-Schaum mit einem Raumgewicht von 6 bis 30 kg/m³, insbesondere 7 bis 12 kg/m³ und PUR-Weichschaum auf Ester- oder Etherbasis mit einem Raumgewicht von 10 bis 60 kg/m³, insbesondere 12 bis 30 kg/m³ oder Partikelverbundschaum auf der Basis von halbhartem PUR-Schaum und PUR-Weichschaum auf Ester- oder Etherbasis mit einem Raumgewicht von 30 bis 250 kg/m³, insbesondere 40 bis 80 kg/m³.

Textilfaservliese sind im Automobilbereich ein häufig verwendeter Konstruktionswerkstoff mit breitem Eigenschaftsspektrum. Beispielsweise wird Phenolharz-gebundenes Textilfaservlies seit langem unter anderem wegen seiner guten Dämpfungseigenschaften als Werkstoff für tragende und verkleidete Teile (rein oder als Verbundwerkstoff) in der Automobilindustrie im PKW- und LKW-Bau eingesetzt.

Phenolharz-gebundenes Textilfaservlies ist in Rohdichten von 50 bis 1000 kg/m³ bei Dicken von 5 bis 30 mm im Handel erhältlich. Es ist als sogenanntes Porenkomposit, bestehend aus drei Phasen (Baumwolle, gehärtetes Phenolharz und Luft) zu beschreiben - ein Konstruktionswerkstoff, dessen Eigenschaftsprofil in weiten Grenzen modifiziert werden kann. Baumwolle hat die Faserform, Phenolharz liegt punktförmig, linear, auch netzflächig als eine Art Matrix vor.

Durch besondere Auswahl der Vliesstoffe kann die Akustik und die Festigkeit des Verbundwerkstoffs besonders gesteuert werden. Besonders bevorzugte Materialien zur Herstellung des Vliesstoffes sind Glasfaser-verstärkte oder Glasgitter-verstärkte Fasermaterialien, insbesondere Bindemittel enthaltende Textilvliese, vorzugsweise solche, die aus einem Baumwollmischgewebe bestehen. Diese Vliese werden durch Pressen bei erhöhter Temperatur auf die gewünschte Festigkeit gebracht.

Die besonderen Eigenschaften und die Leistungsfähigkeit dieser letztgenannten Produktgruppe erklären sich aus der chemischen und morphologischen Struktur der Baumwolle, sowie dem Duroplastcharakter der ausgehärteten Phenolharze, die üblicherweise als Bindemittel der Baumwollmischgewebevliese eingesetzt werden. Weitere Einflußgrößen sind die Verformbarkeit, die Bügelfähigkeit der Baumwolle, die statistische Bindepunkthäufigkeit und auch die Laminat- und/oder Mantelwirkung der längs von Fasern haftenden und so auch auskondensierten Bindemittelmoleküle.

Die Baumwolle übersteht den Fertigungsprozeß praktisch ohne Veränderung ihrer physikalisch-chemischen Eigenschaftsmerkmale. Sie verleiht dem Produkt besondere Qualitätsmerkmale wie Schall-Absorptionsfähigkeit, gute mechanische Festigkeitswerte, Schlagzähigkeit und Splitterfestigkeit in der Kälte.

Besonders bevorzugte Bindemittel für die Vliesstoffe sind ausgewählt aus Phenol-Formaldehyd-Harzen, Epoxidharzen, Polyesterharzen, Polyamidharzen, Polypropylen, Polyethylen und/oder Ethyl-Vinylacetat-Copolymeren. Phenolharze haben nach der Härtung die typischen Duroplasteigenschaften, die sich auf das Fertigprodukt übertragen. Das Textilfaservlies wird aus der Reißbaumwolle und dem pulvrigen Phenolharz üblicherweise auf trockenem Wege hergestellt. Die Aushärtung erfolgt entweder im Heizkanal oder über das ungehärtete Halbzeug als Zwischenstufe in der Presse. Für die Teile, die im Fahrzeugraum Verwendung finden sollen, wird ausgewähltes Textil eingesetzt.

Textilfaservliese im Sinne der vorliegenden Erfindung enthalten vorzugsweise Naturfasern, insbesondere Baumwolle, Flachs, Jute, Leinen, aber auch Kunstfasern wie Polybutylenterephthalate, Polyethylenterephthalate, Nylon 6, Nylon 66, Nylon 12, Viskose oder Rayon als Textilfaser, gegebenenfalls neben üblichen Bindemitteln.

Die Art und Menge der einzusetzenden Bindemittel wird im wesentlichen durch den Anwendungszweck der Textilfaservliese bestimmt. So wird im allgemeinen der Einsatz von 5 bis 50 Gew.-%, insbesondere 20 bis 40 Gew.-% des Bindemittels, bezogen auf das Textilfaservlies bevorzugt. Besonders bevorzugt ist erfindungsgemäß der Einsatz von Faservliesen mit einem Flächengewicht von 800 bis 2000 g/m².

Vorzugsweise beträgt die Schichtdicke der akustisch isolierenden Schicht 3 weniger als 20 mm, insbesondere weniger als 10 mm.

Gegebenenfalls können die Schichten 2 und/oder 3 eine rasterförmige Profilierung, insbesondere an der Grenzfläche der beiden Schichten aufweisen. Die Profilierung wird vorzugsweise von einer Seite aus vorgenommen, sie kann beispielsweise aus konvexen Ausbuchtungen auf der einen Seite bestehen, die als Kegel oder Pyramiden dargestellt sind. Durch material- und kostensparende "Noppenschneidtechnik" können über ein Hohlkammerprinzip hervorragend gut akustische Werte erzielt werden.

Selbstverständlich können durch die Dicke der Schichten Wärmedurchgangswerte und Akustik in weitem Umfang gesteuert werden.

Das Deckvlies 4 dient ähnlich dem Deckvlies 1 zum Schutz vor mechanischem Beschädigungen. Hier ist es besonders bevorzugt, beispielsweise ein dünnes Nadelvlies oder Spinnvlies, zum Schutz des Werkzeuges vor Verschmutzungen einzusetzen. Die Schichtdicke sollte vorzugsweise 30 bis 200 g/m² betragen.

Die erfindungsgemäßen Formteile finden vorzugsweise Verwendung im Bereich der Stirnwand von Motorräumen oder im Bereich des Getriebetunnels von Kraftfahrzeugen.

Die erfindungsgemäßen Formteile werden wie üblich durch einen Wärmeumformprozess hergestellt, so daß an sich im Stand der Technik bekannte Werkzeuge und Produktionseinrichtungen bei einer gegebenen Materialumstellung weiterhin verwendet werden können. Besonders bevorzugt im Sinne der vorliegenden Erfindung werden die Verkleidungen dadurch hergestellt, daß man das textile Gebilde mit dem duroplastisch gebundenem Textilfaservlies unter Einwirkung des duroplastischen Binders verpreßt und verklebt. Hierbei tritt eine Bindung nur an den in Kontakt befindlichen Bereichen auf.

In einer weiteren bevorzugten Ausführungsform der vorliegenden Erfindung kann es vorgesehen sein, die motorseitige Deckschicht 1 partiell oder vollflächig mit einer Metallfolie 5 im Bereich erhöhter Wärmebelastung zu versehen. Bei im Stand der Technik bekannten Absorbern wird üblicherweise eine Schichtdicke der Aluminiumfolie von 250 µm oder mehr gewählt. Dementsprechend ist es auch im Sinne der vorliegenden Erfindung möglich, Aluminiumfolie mit Schichtdicken im Bereich von 50 bis 500 µm einzusetzen. Besonders bevorzugt im Sinne der vorliegenden Erfindung wird jedoch Aluminiumfolie mit Schichtdicken im Bereich von 50 bis 100 µm eingesetzt. Diese geringen Schichtdicken sind verwendbar, weil die übrigen Bestandteile des erfindungsgemäßen Laminats auch geeignet sind, statische Funktionen zu übernehmen.

Durch eine gegebenenfalls vorhandene Perforation der Aluminiumfolie wird einerseits die Wirkung der Aluminiumfolie als Wärmereflektor beibehalten, andererseits aber in diesem Bereich eine Durchlässigkeit für Schallwellen erreicht, so daß die der Schallquelle zugewandten Seite der Aluminiumfolien befindlichen duroplastischen Materialien akustisch wirksam bleiben.

Die obengenannten Schichten 1, 2, 3, 4, und gegebenenfalls 5 werden gemäß der vorliegenden Erfindung besonders bevorzugt durch Kleber miteinander in Verbindung gebracht. Besonders bevorzugt im Sinne der vorliegenden Erfindung ist es, als Kleber zwischen den Schichten 2 und 3 Schmelzpulver, wie beispielsweise Phenolharzpulver oder eine Schmelzklebefolie anzuordnen.

### Ausführungsbeispiele:

Unter Verwendung eines PES-Vlieses 1 mit einem Flächengewicht von etwa 120 g/m² und einer Klebebeschichtung sowie einer 3 mm starken Melaminharzschaumschicht 2 mit einer Dichte von 10 kg/m³ sowie einem über eine weitere Klebeschicht verbundenen 7 mm starken Schicht 3 aus Partikelverbundschaum wurde dieser Aufbau mit einem weiteren PES-Vlies 4 mit einem Flächengewicht von 120 g/m² versehen.

Die Ausgangsmaterialien wurden in einem dreidimensionalen Preßwerkzeug unter erhöhtem Druck (Presse mit 80 t Schließkraft; 120 sec) und erhöhter Temperatur (190 °C) miteinander zu einem Formteil verpreßt, wodurch die obengenannten Schichtdicken erreicht werden konnten.

Es zeigte sich, daß der so hergestellte Schichtaufbau einer thermischen Belastung von 200 °C, vergleichbar mit einer motorseitigen Wärmebelastung gleicher Temperatur, mehr als 3 Wochen ohne merkbare Veränderungen standhielt.

## Patentansprüche

1. Wärme- und schalldämmende Verkleidungen für den Motorraum von Kraftfahrzeugen, bestehend aus einer motorseitigen Deckschicht (1), einer damit in Kontakt befindlichen, akustisch isolierenden, bis 180°C dauertemperaturbeständigen, bei 200°C drei Wochen dauertemperaturbelastbaren, duroplastischen Schaumstoffschicht (2) einer Dicke von weniger als 5 mm, einer damit in Kontakt befindlichen akustisch isolierenden Schicht (3) aus Kunststoffschaum, Partikelverbundschaum oder Faservlies, bestehend aus nativen oder synthetischen Fasern sowie deren Gemische, genadelt oder ungenadelt und einer damit in Kontakt befindlichen, der Motorseite abgewandten Deckschicht (4).

2. Verkleidung nach Anspruch 1, **dadurch gekennzeichnet, daß** die Deckschicht (1) oder (4) jeweils unabhängig voneinander aus einem PES-Vlies, einem Glasfaservlies, einem Kohlenstoff-Faservlies, einem Keramikfaservlies oder einem Mineralfaservlies besteht.

3. Verkleidung nach Anspruch 1, **dadurch gekennzeichnet, daß** das Deckvlies (1), ein Nadelvlies oder Spinnvlies, insbesondere ein Flächengewicht von 30 bis 200 g/m² aufweist.

4. Verkleidung nach Anspruch 1, **dadurch gekennzeichnet, daß** die Schaumstoffschicht (2) aus einem flexiblen, offenzelligen Schaumstoff aus Melaminharz besteht.

5. Verkleidung nach Anspruch 1, **dadurch gekennzeichnet, daß** der Kunststoffschaum der akustisch isolierenden Schicht (3) ein Raumgewicht von 6 bis 30 kg/m³ aufweist.

6. Verkleidung nach Anspruch 1, **dadurch gekennzeichnet, daß** der Partikelverbundschaum der akustisch isolierenden Schicht (3) ein Raumgewicht von 30 bis 250 kg/m³ aufweist.

7. Verkleidung nach Anspruch 1, **dadurch gekennzeichnet, daß** das Faservlies der akustisch isolierenden Schicht (3) ein Flächengewicht von 800 bis 2000 g/m² aufweist.

8. Verkleidung nach Anspruch 1, **dadurch gekennzeichnet, daß** die Schichtdicke der akustisch isolierenden Schicht (3) weniger als 20 mm, insbesondere weniger als 10 mm beträgt.

9. Verkleidung nach einem oder mehreren der Ansprüche 1 bis 8, **dadurch gekennzeichnet, daß** die Schicht (2) und/oder (3) eine rasterförmige Profilierung insbesondere an der Grenzfläche der beiden Schichten aufweist.

10. Verkleidung nach einem der Ansprüche 1 bis 9 umfassend eine motorseitig angeordnete partiell oder vollflächige Metallfolie (5) im Bereich erhöhter Wärmebelastung.

11. Verkleidung nach einem der Ansprüche 1 bis 10, **dadurch gekennzeichnet, daß** die jeweiligen Lagen (1), (2), (3), (4) und gegebenenfalls (5) durch eine Klebeschicht verbunden sind.

12. Verfahren zur Herstellung von Verkleidungen wie in einem der Ansprüche 1 bis 11 definiert, **dadurch gekennzeichnet, daß** man die Schichten (1), (2), (3), (4) und gegebenenfalls (5) unter Einwirkung von gegenüber Raumtemperatur erhöhter Temperatur und gegenüber dem Normaldruck erhöhtem Druck verpreßt.

13. Verwendung von Verkleidungen wie in einem der Ansprüche 1 bis 11 definiert im Bereich der Stirnwand von Motorräumen oder im Bereich des Getriebetunnels von Kraftfahrzeugen.

## Claims

1. Heat-insulating and soundproofing linings for the engine compartment of motor vehicles comprised of a covering layer (1) facing the engine, in contact therewith a sound-absorbing, duroplastic foam layer (2) having a long-term thermal stability up to 180 °C, a long-term thermal loadability at 200 °C of three weeks and a thickness below 5 mm, in contact therewith a soundproofing layer (3) of plastic foam, particle composite foam or fibrous web consisting of natural or synthetic fibres and mixtures thereof, needled or non-needled, and in contact therewith a covering layer (4) averted from the engine side.

2. The lining according to claim 1, **characterized in that** the covering layers (1) or (4) each independently of each other are comprised of a PES web, a glass fibre web, a carbon fibre web, a ceramic fibre web, or a mineral fibre web.

3. The lining according to claim 1, **characterized in that** the covering web (1), a needle-punched nonwoven or a spunbonded nonwoven, has in particular a weight per unit area from 30 to 200 g/m².

4. The lining according to claim 1, **characterized in that** the foam layer (2) is comprised of a flexible, open-cell foam of melamine resin.

5. The lining according to claim 1, **characterized in that** the plastic foam of the sound-absorbing layer (3) has a volumetric weight from 6 to 30 kg/m³.

6. The lining according to claim 1, **characterized in that** the particle composite foam of the sound-absorbing layer (3) has a volumetric weight from 30 to 250 kg/m³.

7. The lining according to claim 1, **characterized in that** the nonwoven fabric of the sound-absorbing layer (3) has a volumetric weight from 800 to 2000 g/m².

8. The lining according to claim 1, **characterized in that** the layer thickness of the sound-absorbing layer (3) is below 20 mm, in particular below 10 mm.

9. The lining according to one or several of claims 1 to 8, **characterized in that** the layer (2) and/or (3) has a grid-like shaping in particular at the boundary surface of said layers.

10. The lining according to any one of claims 1 to 9, comprising a partial or all-over engine-side metal foil (5) in the area of increased thermal load.

11. The lining according to any one of claims 1 to 10, **characterized in that** the respective layers (1), (2), (3), (4) and optionally (5) are connected by an adhesive layer.

12. A process for manufacturing linings defined in any one of claims 1 to 11, **characterized in that** the layers (1), (2), (3), (4) and optionally (5) are pressed under the influence of a temperature elevated with respect to room temperature and a pressure increased with respect to normal pressure.

13. Use of linings defined in any one of claims 1 to 11 in the bulkhead area of motor vehicles or in the area of the transmission tunnel of motor vehicles.

## Revendications

1. Habillage calorifuge et insonorisant pour le compartiment moteur de véhicules automobiles, constitué d'une couche de couverture (1) côté moteur, d'une couche de produit moussé (2) thermodurcissable insonorisante, en contact avec la première couche et résistant à une température permanente allant jusqu'à 180°C, supportant une charge thermique permanente de 200°C pendant trois semaines et présentant une épaisseur inférieure à 5 mm, d'une couche (3) insonorisante, en contact avec cette couche et faite de matière plastique moussée, de mousse composite particulaire ou d'un produit non-tissé réalisé à partir de fibres natives ou synthétiques et de mélanges de ces fibres, aiguilleté ou non aiguilleté, et d'une couche de couverture (4) qui est en contact avec cette couche et est éloignée du moteur.

2. Habillage selon la revendication 1, **caractérisé en ce que** la couche de couverture (1) ou (4) sont constituées, indépendamment l'une de l'autre, d'un non-tissé en polyester, d'un non-tissé en fibres de verre, d'un non-tissé en fibres de carbone, d'un non-tissé en fibres céramiques ou d'un non-tissé de fibres minérales.

3. Habillage selon la revendication 1, **caractérisé en ce que** le non-tissé de couverture (1), qui est un non-tissé aiguilleté ou un non-tissé spunlaid, présente en particulier un poids compris entre 30 et 200 g/m².

4. Habillage selon la revendication 1, **caractérisé en ce que** la couche de produit moussé (2) est faite d'un produit moussé souple en résine de mélamine à alvéoles ouvertes.

5. Habillage selon la revendication 1, **caractérisé en ce que** la matière plastique moussée de la couche (3) insonorisante présente un poids spécifique compris entre 6 et 30 kg/m³.

6. Habillage selon la revendication 1, **caractérisé en ce que** la mousse composite particulaire de la couche (3) insonorisante présente un poids spécifique compris entre 30 et 250 kg/m³.

7. Habillage selon la revendication 1, **caractérisé en ce que** le non-tissé de la couche (3) insonorisante présente un poids compris entre 800 et 2000 g/m².

8. Habillage selon la revendication 1, **caractérisé en ce que** l'épaisseur de la couche (3) insonorisante est inférieure à 20 mm, notamment inférieure à 10 mm.

9. Habillage selon une ou plusieurs des revendications 1 à 8, **caractérisé en ce que** la couche (2) et/ou (3) présente un profil en forme de grille, notamment au niveau de l'interface entre les deux couches.

10. Habillage selon l'une quelconque des revendications 1 à 9, comprenant une feuille métallique (5) disposée partiellement ou sur toute la surface côté moteur, dans la région où la charge thermique est élevée.

11. Habillage selon l'une quelconque des revendications 1 à 10, **caractérisé en ce que** les différentes couches (1), (2), (3), (4) et, le cas échéant, (5) sont liées entre elles par une couche d'adhésif.

12. Procédé de fabrication d'habillages tels que définis dans l'une quelconque des revendications 1 à 11, **caractérisé en ce que** l'on comprime les couches (1), (2), (3), (4) et, le cas échéant, (5) sous l'action d'une température supérieure à la température ambiante et avec une pression supérieure à la pression normale.

13. Utilisation d'habillages tels que définis dans l'une quelconque des revendications 1 à 11, dans la région de la paroi frontale de compartiments moteurs ou dans la région du tunnel de l'arbre de transmission de véhicules automobiles.
